# EUROPÄISCHE PATENTSCHRIFT

(11) **EP 2 823 113 B1**
(45) Veröffentlichungstag und Bekanntmachung des Hinweises auf die Patenterteilung: **19.09.2018**
(21) Anmeldenummer: 13727025.2
(22) Anmeldetag: 06.03.2013
(51) Int. Cl.: E04B 1/24, F16B 7/04

(54) **VORRICHTUNG ZUM BEFESTIGEN EINER SCHIENE**
DEVICE FOR FIXING A RAIL
DISPOSITIF POUR FIXER UN RAIL

(30) Priorität: 06.03.2012 DE 202012002174 U
(43) Veröffentlichungstag der Anmeldung: 14.01.2015
(73) Patentinhaber: Schletter GmbH, 83527 Kirchdorf (DE)
(72) Erfinder: SCHLETTER, Ludwig, 83527 Haag (DE); MADLINDL, Stefan, 84453 Mühldorf (DE); DECHANT, Gabriel, 83257 Gstadt (DE)
(74) Vertreter: Thum, Bernhard
(86) Internationale Anmeldenummer: PCT/DE2013/000119
(87) Internationale Veröffentlichungsnummer: WO 2013/131509

(56) Entgegenhaltungen:
- WO-A1-93/15622
- FR-A1- 2 572 112
- US-A- 1 332 442

## Beschreibung

Die Erfindung betrifft eine Vorrichtung zum Befestigen einer Schiene, insbesondere einer rollgeformten Schiene mit z-förmigem Querschnitt.

Aus EP 0 391 048 A2 ist eine Vorrichtung zum Befestigen einer aus Stahl rollgeformte Schiene mit z-förmigem Querschnitt bekannt. Die Schiene ist an ihrem diagonalen Mittelsteg mit der Vorrichtung verschraubt.

Aus FR 2 572 112 A1 ist eine Klemmvorrichtung bekannt, die einen U-förmigen Körper und einen in diesem geführt einrastbaren Klemmkeil aufweist.

Es ist eine Aufgabe der Erfindung, eine Vorrichtung der eingangs genannten Art zu schaffen, an der die Schiene einfach, schnell und sicher zu montieren ist. Die Befestigung mittels der Vorrichtung soll hoch belastbar sein. Außerdem soll die Vorrichtung besonders einfach zu fertigen sein.

Die Aufgabe wird mit der in Anspruch 1 angegebenen Vorrichtung gelöst. Demgemäß ist die Vorrichtung zum Befestigen einer Schiene, insbesondere einer rollgeformten Schiene mit z-förmigem Querschnitt vorgesehen, wobei die Schiene einen Befestigungsflansch aufweist. Die Vorrichtung umfasst eine Halteplatte. Die Halteplatte enthält einen Einschnitt mit einer Stirnöffnung. Wesentlich ist weiter, dass die Schiene mittels des Befestigungsflanschs in den Einschnitt eingesetzt ist und hierbei die Halteplatte kreuzend durchdringt und die Schiene durch die Stirnöffnung aus dem Einschnitt herausragt. Der Einschnitt weist einen ersten Randabschnitt, einen zweiten Randabschnitt und einen dritten Randabschnitt auf, wobei der der zweite Randabschnitt dem ersten Randabschnitt gegenübersteht und der Befestigungsflansch auf dem ersten Randabschnitt lagert. Besonders charakteristisch ist, dass ein schraubenfreies Spannmittel vorgesehen ist, das sich zwischen den Befestigungsflansch und den zweiten Randabschnitt spreizt und dadurch den Befestigungsflansch gegen den ersten Randabschnitt presst. Wesentlich ist außerdem, dass der dritte Randabschnitt als Anschlag wirkt, der ein Ausdringen der Schiene aus dem Einschnitt in einer Richtung parallel zu dem ersten Randabschnitt blockiert.

Aus rollgeformtem bzw. kaltgewalztem Band- oder Flachstahl gefertigte Schienen verfügen häufig nicht über hinterschnittene Befestigungsnuten oder geeignete Befestigungsränder, weshalb diese nicht ohne Weiteres schraubenfrei befestigbar sind. Dies gilt besonders für Schienen mit z-förmigem Querschnitt.

Mittels der erfindungsgemäßen Vorrichtung können solche Schienen montagefreundlich und dennoch sehr stabil befestigt werden. Die Vorrichtung ist dabei bauteilarm und fertigungsgerecht herstellbar. So kann die Vorrichtung aus nur zwei einfach herzustellenden Komponenten bestehen: der Halteplatte mit dem integrierten Einschnitt sowie dem schraubenfreien Spannmittel.

Das schraubenfreie Spannmittel ist ein Keil, der zwischen den Befestigungsflansch der Schiene und den zweiten Randabschnitt des Einschnitts mit einer Translationsbewegung eingetrieben werden kann. Ein solcher Keil kann fertigungsgerecht zum Beispiel als Strangpressteil oder bevorzugt als Tiefziehteil hergestellt sein.

Die Halteplatte ist vorzugsweise einstückig, integral geformt und/oder metallen. Sie kann beispielsweise ein einfaches Stanzteil aus Stahl sein. Die Halteplatte ist bevorzugt eben oder planparallel ausführt. Insbesondere kann die Halteplatte eine Stahlplatte mit einer Stärke von wenigen Millimetern sein. Der Einschnitt kann durch übliche Verfahren wie Stanzen oder Schneiden aus der Halteplatte ausgenommen werden. Der Einschnitt unterbricht an einer Stelle den Schmalrand bzw. die Außenkontur der Halteplatte durch eine Stirnöffnung. Der Einschnitt ist in der Ebene der Halteplatte bevorzugt aber nicht notwendig tiefer als breit und kann daher auch allgemein als Ausnehmung mit einer Stirnöffnung bezeichnet werden.

Die Halteplatte kann ortsfest an einem tragenden Bauteil angeordnet sein, beispielsweise an einer Stütze oder einer Tragschiene. Die Art der Befestigung der Halteplatte mit dem tragenden Bauteil kann beispielsweise eine Schweiß-, Schraub-, Niet- oder Klemmverbindung sein.

Die Vorrichtung eignet sich besonders aber nicht nur für Schienen, die aus rollgeformten Stahl gefertigt sind und/oder einen z-förmigen Querschnitt aufweisen. Ein z-förmiger Querschnitt ist durch zwei bevorzugt parallele Flansche, einem oberen und einem unteren, gekennzeichnet, die durch einen dazu diagonalen Mittelsteg integral verbunden sind. Ein solcher z-förmiger Querschnitt ähnelt oder gleicht einem Buchstaben Z.

Der Befestigungsflansch ist integraler Bestandteil der Schiene und vorzugsweise längs durchgehend, das heißt nicht unterbrochen. Andere Begriffe für den Befestigungsflansch können Befestigungsstreifen, -steg oder -gurt sein. Im Falle eines z-förmigen Querschnitts kann der Befestigungsflansch einer von den zwei parallelen Flanschen sein, bevorzugt der bezüglich der Schwerkraft untere, sodass die Schiene schwerkraftbedingt in der Vorrichtung lagern kann. Eine hängende Anordnung, bei der die Schiene in der Vorrichtung hängt, ist ebenso denkbar.

Die Montage der Schiene an der Vorrichtung gestaltet sich sehr einfach: Nach Einführen und ggf. Positionieren der Schiene in die Halteplatte, das heißt genauer in den Einschnitt der Halteplatte, wird das schraubenfreie Spannmittel zwischen Befestigungsflansch und zweitem Randabschnitt eingetrieben. Beim Eintreiben spreizt sich das schraubenfreie Spannmittel zwischen den Befestigungsflansch und den zweiten Randabschnitt.

Ein weiterer Montagevorteil ergibt sich dadurch, dass die Schiene in der Halteplatte bereits vor dem Eintreiben und sogar noch vor einem etwaigen Einsetzen des schraubenfreien Spannmittels mittels des als Anschlag wirkenden dritten Randabschnitts provisorisch in der Weise gehalten wird, dass ein Ausdringen oder Herausrutschen des Befestigungsflansches aus der Stirnöffnung des Einschnitts in einer zum ersten Randabschnitt parallelen Richtung blockiert wird. Dies ist besonders dann vorteilhaft, wenn die Halteplatte dergestalt ortsfest befestigt ist, dass der erste Randabschnitt zur Stirnöffnung hin abschüssig orientiert ist. Eine solche Orientierung tritt häufig im Zusammenhang mit der Schrägmontage von Solarmodulen auf. Vorzugsweise ist der Einschnitt in Art eines offenen Schlitzes so schmal, dass die Schiene bei einer Drehung um einen Drehpunkt im Bereich des dritten Randabschnitts nicht aus dem Einschnitt herauskippen kann.

Das Spannmittel wirkt mittels eines Keils. Das Spannmittel kann dazu aus genau einem Keil bestehen. Dieser kann zwischen den Befestigungsflansch und den zweiten Randabschnitt eingetrieben sein, beispielsweise mittels einem Hammer, einer Zange oder einer maschinellen Eintreibeinrichtung. Die Eintreibrichtung ist bevorzugt parallel zur Schiene. Zur einfacheren Montage und/oder zur besseren Kraftverteilung sind auch Mehrfachkeile und Kombinationen mit Platten oder anderen ebenen Körpern denkbar, die Bestandteil des schraubenfreien Spannmittels sind.

An einer Keilfläche des Keils grenzt eine Rastvertiefung an. Eine solche Rastvertiefung kann insbesondere mit dem zweiten Randabschnitt zusammenwirken. Durch ein Einrasten des zweiten Randabschnitts in die Rastvertiefung wird der Keil sicher in einer Endstellung gehalten und es wird im Rahmen von Formtoleranzen stets eine gleiche Spannkraft erzeugt.

An die Rastvertiefung grenzt in weiterer Folge ein Anschlag, der ein weiteres Eintreiben des Keils über die Rastvertiefung hinaus blockiert. Der Anschlag kann mit der Halteplatte im Bereich des zweiten Randabschnitts zusammenwirken.

Um ein Verrutschen des Keils im Einschnitt zu verhindern, kann der Einschnitt einen Anschlag aufweisen, der eine Bewegung des Keils weg von der Stirnöffnung bzw. tiefer in den Einschnitt hinein blockiert.

Das Spannmittel kann alternativ, in einer nicht erfindungsgemäßen Ausführungsform mittels einem Exzenter bzw. eines exzentrischen geformten Bauteils wirken. Ein solcher Exzenter kann mit Hilfe eines Hebels betätigt werden und auf einer zusätzlichen Stützplatte schwenkbar gelagert sein, die Bestandteil des Spannmittels ist. Zum Einrasten des Exzenters in einer Endstellung kann im zweiten Randabschnitt eine Rastvertiefung enthalten sein. Eine Drehführung am zweiten Randabschnitt und eine Rastvertiefung in der Schiene oder der optionalen Stützplatte sind ebenfalls denkbar. Um ein Drehen des Exzenters über die Rastvertiefung hinaus zu blockieren, kann ein Endanschlag vorgesehen sein. Um einer unerwünschten Bewegung des Exzenters oder eines Stützkörpers in einer Richtung weg von der Stirnöffnung bzw. tiefer in den Einschnitt hinein zu blockieren, kann eine Lagesicherung vorgesehen sein.

Bei einem mittels eines Exzenters wirkenden Spannmittel ist es auch möglich, dass der zweite Randabschnitt eine exzentrische Form aufweist und mit einem walzenförmigen Körper zusammenwirkt. Der walzenförmige Körper stellt hierbei das Spannmittel dar und kann mittels eines Hebels betätigt werden. Der walzenförmigen Körper kann wie vorbeschrieben an der Schiene oder einem separaten Stützkörper schwenkbar gelagert sein.

Das Spannmittel kann alternativ, in einer nicht erfindungsgemäßen Ausführungsform auch mittels eines Spreizkörpers wirken, in dem ein gesteuert aktivierbares quellfähiges Material enthalten ist. Ein solches Material kann beispielsweise ein flüssigkeitsabsorbierendes Polymer sein, das durch Zugabe einer Flüssigkeit stark an Volumen zunimmt. Es ist denkbar, die Flüssigkeit mittels einer offenbaren Kapsel an dem Spreizkörper zu integrieren. Mittels Erwärmung oder Bestromung sich volumentrisch stark erweiternde Materialien sind ebenso denkbar.

In einer bevorzugten Ausführungsform ist vorgesehen, dass der dritte Randabschnitt die Schiene bezüglich des zweiten Randabschnitts teilweise übergreift. Dadurch wird ein bezüglich des zweiten Randabschnitts senkrechtes Abheben der Schiene blockiert. Hierbei ist es zweckmäßig, wenn der Befestigungsflansch in dem Einschnitt nicht nur kraftschlüssig, sondern auch formschlüssig gegen Verrutschen parallel zum zweiten Randabschnitt gesichert ist. Hierfür kann vorgesehen sein, dass eine Erhebung oder Vertiefung im zweiten Randabschnitt in eine Versteifungssicke des Befestigungsflansches eingreift. Außerdem ist möglich, das Spannmittel und mittels des Spanmittels wiederum die Schiene gegen ein Verrutschen parallel zum zweiten Randabschnitt zu sichern. Insbesondere kann ein Spannmittel formschlüssig an einer Versteifungssicke lagegesichert sein und dazu eine seiner Unterseite eine Eintiefung aufweisen. Ein Übergreifen der Schiene ist besonders im Fall von hohen Zugkräften vorteilhaft, die bezüglich des zweiten Randabschnitts abhebend wirken. Im Falle eines z-förmigen Querschnitts kann der dritte Randabschnitt zumindest in einem Bereich, vorzugsweise in einem Endbereich zur Stirnöffnung hin, etwa parallel an dem diagonalen Mittelsteg anliegen.

In einer bevorzugten Ausführungsform ist der Einschnitt auf den Befestigungsflansch dergestalt abgestimmt, dass die Schiene mit dem Befestigungsflansch voran bzw. frontal durch die Stirnöffnung in den Einschnitt eingeführt werden kann. Dies erleichtert die Montage, da andernfalls die Halteplatte über eines der Längsenden der Schiene aufgeschoben oder umgekehrt die Schiene der Länge nach durch die Halteplatte bis zur gewünschten Montageposition geschoben werden muss. Zum einfacheren Einführen der Schiene kann an einem Bereich außen zur Stirnöffnung hin mindestens eine Einführschräge vorgesehen sein.

Besonders bevorzugt ist es, wenn das Einführen der Schiene mit dem Befestigungsflansch frontal durch die Stirnöffnung des Einschnitts ausschließlich mit einer kombinierten Schwenk- und Schubbewegung erfolgen kann. Dadurch kann die Ausnehmung klein ausgeführt und die Halteplatte materialeffizient gestaltet sein. Außerdem wird ein unbeabsichtigtes Lösen der Schiene erschwert, was die Montagesicherheit zusätzlich erhöht.

Die Vorrichtung eignet sich besonders für Schienen mit z-förmigem Querschnitt. Ein solcher Querschnitt ist durch einen weiteren Befestigungsflansch gekennzeichnet, wobei die zwei Befestigungsflansche bevorzugt parallel zueinander verlaufen und diagonal mittels eines Mittelstegs integral verbunden sind.

Die Erfindung betrifft auch eine Schienenkreuzverbindung nach Anspruch 4, umfassend die vorbeschriebene Vorrichtung, wobei eine Tragschiene vorgesehen ist, welche die Schiene kreuzt und an der die Halteplatte befestigt ist. Die Halteplatte ist bevorzugt parallel zur Tragschiene und nur an einer Seite derselben angeordnet. Die Tragschiene kann ortsfest angeordnet und längsgeneigt sein, wobei die Schiene bevorzugt über der Tragschiene verläuft und die Halteplatte vertikal orientiert ist. Bei einer solchen Schienenkreuzverbindung verläuft der zweite Randabschnitt bevorzugt parallel zur Tragschiene.

Die Erfindung betrifft auch ein Verfahren zum Erstellen der vorbeschriebenen Schienenkreuzverbindung. Ein solches Verfahren weist folgende wesentliche Schritte auf: a) Befestigen der Halteplatte an der Tragschiene, b) Einführen der Schiene, sodass der Befestigungsflansch auf dem ersten Randabschnitt lagert, c) Positionieren des schraubenfreien Spannmittels zwischen dem Befestigungsflansch und dem zweiten Randabschnitt und d) Betätigen des schraubenfreien Spannmittels.

Es erlaubt einen hohen Vormontagegrad, wenn zwischen Schritt a) und b) ein Verbringen der Tragschiene zusammen mit der daran befestigten Halteplatte auf eine Baustelle erfolgt, insbesondere ausgehend von einem dem letzten wesentlichen Fertigungsschritt näheren Vormontageort.

Eine besonders angenehme Art der Montage ergibt sich, wenn der Schritt b) durch das Einführen der Schiene mit dem Befestigungsflansch frontal durch die Stirnöffnung erfolgt. Auf diese Weise wird ein Aufschieben der Haltplatte auf die Schiene oder ein Durchschieben der Schiene durch die Halteplatte über größer Längen bis zur gewünschten Befestigungsstelle vermieden.

Nachfolgend werden Ausführungsbeispiele der Erfindung anhand von Figuren 1-7 näher erläutert, wobei Figuren 8-11 keine erfindungsgemäßen Vorrichtungen zeigen. Es zeigen:
- Fig. 1: eine Seitenansicht einer Vorrichtung, die eine Schiene mit z-förmigen Questschnitt mit einer Tragschiene kreuzend verbindet
- **Fig. 2**: eine Perspektive der Vorrichtung gemäß **Fig. 1**
- **Fig. 3**: eine Perspektive der Vorrichtung gemäß **Fig. 1**
- **Fig. 4**: eine Rückansicht der Vorrichtung gemäß **Fig. 1**
- **Fig. 5**: eine Abfolge des Einführens der Schiene mit dem z-förmigen Querschnitt in die Vorrichtung gemäß **Fig. 1**
- **Fig. 6**: eine Perspektive der Vorrichtung gemäß **Fig. 1** im ungespannten Zustand
- **Fig. 7**: eine Perspektive einer Anordnung mit mehreren Vorrichtungen gemäß. **Fig. 1**
- **Fig. 8**: eine Seitenansicht einer Vorrichtung im ungespannten Zustand
- **Fig. 9**: eine Seitenansicht der Vorrichtung gemäß **Fig. 8** im gespannten Zustand
- **Fig. 10**: eine Seitenansicht einer Vorrichtung im ungespannten Zustand
- **Fig. 11**: eine Seitenansicht der Vorrichtung gemäß **Fig. 10** im gespannten Zustand

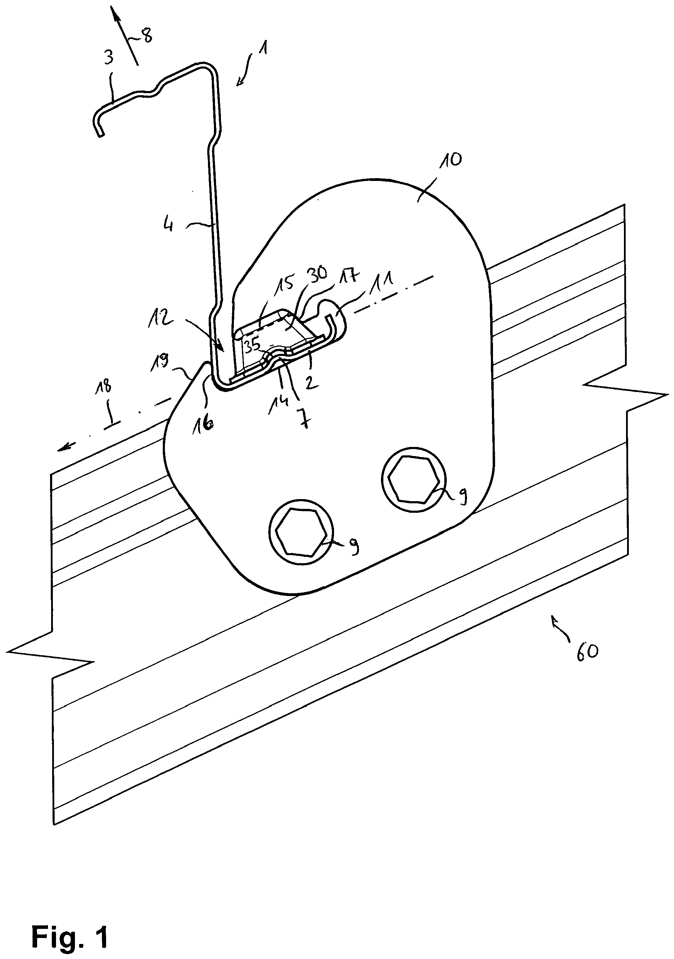

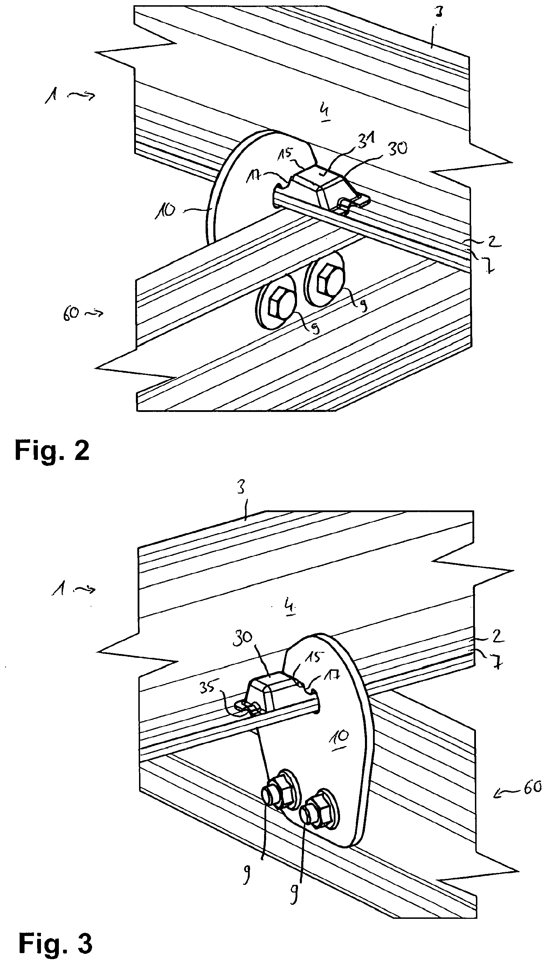

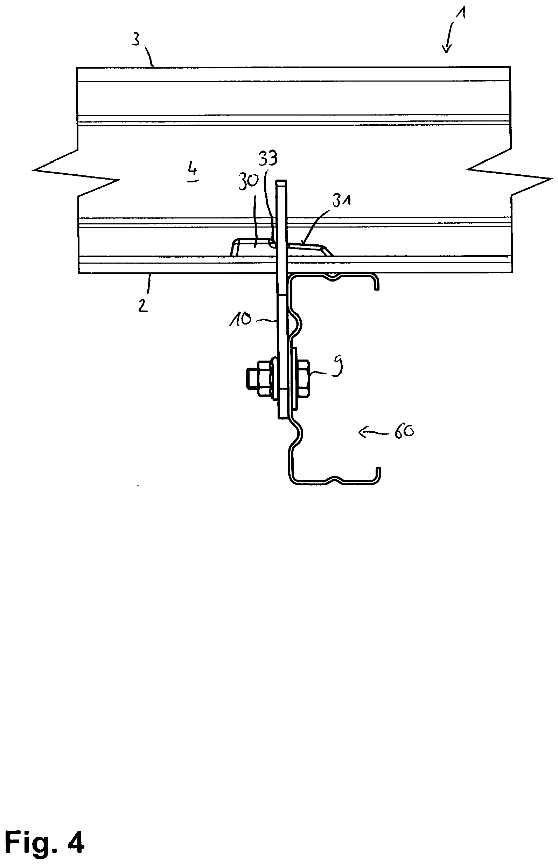

**Fig. 1** bis **Fig. 4** zeigen eine Vorrichtung, die eine Schiene **1** mit z-förmigem Querschnitt an einer Tragschiene **60** befestigt. Die Schiene **1** kreuzt die Tragschiene **60** und verläuft bezüglich der Schwerkraft über dieser. Sowohl die Schiene **1** als auch die Tragschiene **60** sind aus einem Stahl rollgeformte Schienen. Die Tragschiene **60** ist nicht näher ersichtlich ortsfest angeordnet und längsgeneigt.

Die Schiene **1** weist einen unteren Befestigungsflansch **2** und einen oberen Befestigungsflansch **3** auf, die hier parallel zueinander verlaufen. Zwischen den Befestigungsflanschen **2** und **3** verläuft diagonal ein Mittelsteg **4,** mittels dem die Befestigungsflansche **2** und **3** integral verbunden sind. Die Befestigungsflansche **2** und **3** sowie der Mittelsteg **4** gleichen im Querschnitt im Wesentlichen der Form eines Z.

Die Vorrichtung weist eine Halteplatte **10** auf. Die aus einer ebenen Stahlplatte bestehende Halteplatte **10** ist an einer vertikalen Außenseite der Tragschiene **60** mittels zweier Schrauben **9** befestigt. Die Halteplatte **2** verläuft parallel zur Tragschiene **60** und ist vertikal ausgerichtet.

Die Halteplatte **10** enthält einen Einschnitt **11** mit einer Stirnöffnung **12.** Der Einschnitt **11** durchdringt die Halteplatte **10** in der Zeichnungsebene gemäß **Fig. 1** vollständig und weist einen ersten Randabschnitt **14,** einen zweiten Randabschnitt **15** und einen dritten Randabschnitt **16** auf. Der erste Randabschnitt **14** und der zweite Randabschnitt **15** stehen einander parallel gegenüber und sind parallel zur Tragschiene **60.**

Die Schiene **1** ist mittels ihres Befestigungsflanschs **2** in den Einschnitt eingesetzt und durchdringt hierbei kreuzend die Halteplatte **10.** Außerdem ist zu erkennen, dass die Schiene **1** durch die Stirnöffnung **12** aus dem Einschnitt herausragt. Der Einschnitt **11** umgibt den Befestigungsflansch fast vollständig in c-förmiger Weise. Der untere Befestigungsflansch **2** lagert mit seiner unteren Seite auf dem ersten Randabschnitt **14.** Zu erkennen ist, dass der ersten Randabschnitt **14** und der zweite Randabschnitt **15** auf verschiedenen Seiten des Befestigungsflansches **2** angeordnet sind und daher wie zuvor erwähnt einander gegenüberstehen.

Die Vorrichtung weist außerdem ein Spannmittel auf, das in diesem Ausführungsbeispiel als Keil **30** ausgeführt ist und auch als Keilkörper bezeichnet werden kann. Der Keil **30** spreizt sich beim Eintreiben zwischen die obere Seite des Befestigungsflanschs **2** und dem zweiten Randabschnitt **15** und presst auf diese Weise den Befestigungsflansch **2** gegen den ersten Randabschnitt **14.** Der Keil **30** wird hierzu parallel zur Schiene **1** eingetrieben, beispielsweise mit einem Hammer oder einer Zange.

Der Keil **30** weist eine Keilfläche **31** auf. An die Keilfläche **31** grenzt eine Rastvertiefung **32** an. Diese Rastvertiefung **32** wirkt mit dem zweiten Randabschnitt **15** zusammen. Durch Einrasten des zweiten Randabschnitts **15** in die Rastvertiefung **32** wird der Keil **30** sicher in einer Endstellung gehalten, und es wird im Rahmen von Formtoleranzen stets eine gleiche Spannkraft erzeugt. Die Rastvertiefung **32** ist in Eintreibrichtung etwa mittig auf dem Keil **30** vorgesehen, sodass der zweite Randabschnitt **15** den Keil **30** im verrasteten Zustand etwa mittig belastet und der Pressdruck gleichmäßig auf den Befestigungsflansch **2** verteilt wird.

Außerdem weist der Keil **30** einen Anschlag **33** auf. Der Anschlag **33** grenzt gegenüber der Keilfläche **31** an die Rastvertiefung **32** an. Der Anschlag **33** blockiert ein Eintreiben des Keils **30** über die Rastvertiefung **32** hinaus. Der Keil **30** ist in diesem Ausführungsbeispiel als Tiefziehteil ausgeführt und innen hohl und auf der in den Zeichnungen nicht zu erkennenden Rückseite offen.

Wesentlich ist ferner, dass der dritte Randabschnitt **16** als Anschlag wirkt, der ein Ausdringen der Schiene **1** aus dem Einschnitt **11** in einer Richtung **18** parallel zu dem ersten

Randabschnitt **14** blockiert. Zudem ist vorgesehen, dass der dritte Randabschnitt **16** die Schiene **1** bezüglich des zweiten Randabschnitts **15** teilweise übergreift. Der dritte Randabschnitt **16** liegt dazu etwa parallel an dem Mittelsteg **4** an. Dadurch wird ein bezüglich des zweiten Randabschnitts **15** senkrechtes Abheben **8** der Schiene **1** blockiert. Auf diese Weise können besonders hohe Zugkräfte auf die Schiene **1** wirken, ohne dass sich die Schiene **1** aus der Vorrichtung lösen kann. Die Halteplatte **2** ist im Bereich des dritten Randabschnitts **16** als Nase zu erkennen.

Um ein unabsichtliches Verrutschen des Keils **30** in dem Einschnitt **11** während oder nach dem Eintreiben des Keils **30** zu verhindern, weist der Einschnitt **11** einen Anschlag **17** auf, der eine Bewegung des Keils **30** weg von der Stirnöffnung bzw. tiefer in den Einschnitt **11** hinein formschlüssig blockiert. Da der Keil **30** mit einer geraden Seitenkante an dem runden Eckbereich zwischen dem Befestigungsflansch **2** und dem Mittelsteg **4** ansteht ist mittels des Keils **30** auch die Schiene **1** gegen ein solches Verrutschen gesichert. Zur Lagersicherung der Schiene **1** mittels des Keils **30** ist außerdem vorgesehen, dass eine Versteifungssicke **7** im Befestigungsflansch **2** formkorrespondierend in eine Eintiefung **35** an der Unterseite des Keils **30** eingreift. Außerdem kann vorgesehen sein, dass der erste Randabschnitt **14** eine Erhebung aufweist, die zur Lagesicherung in die Versteifungssicke **7** eingreift.

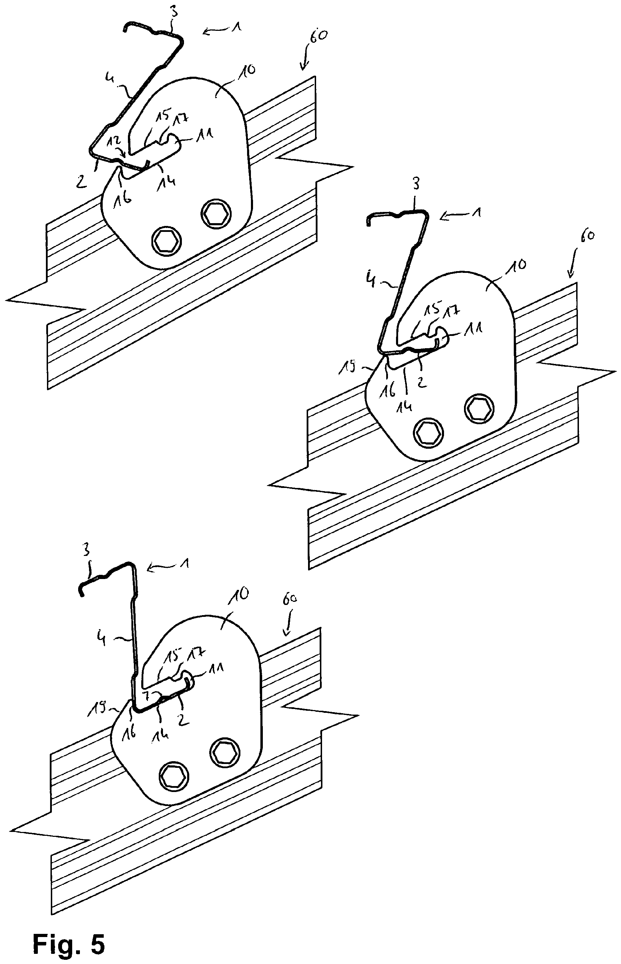

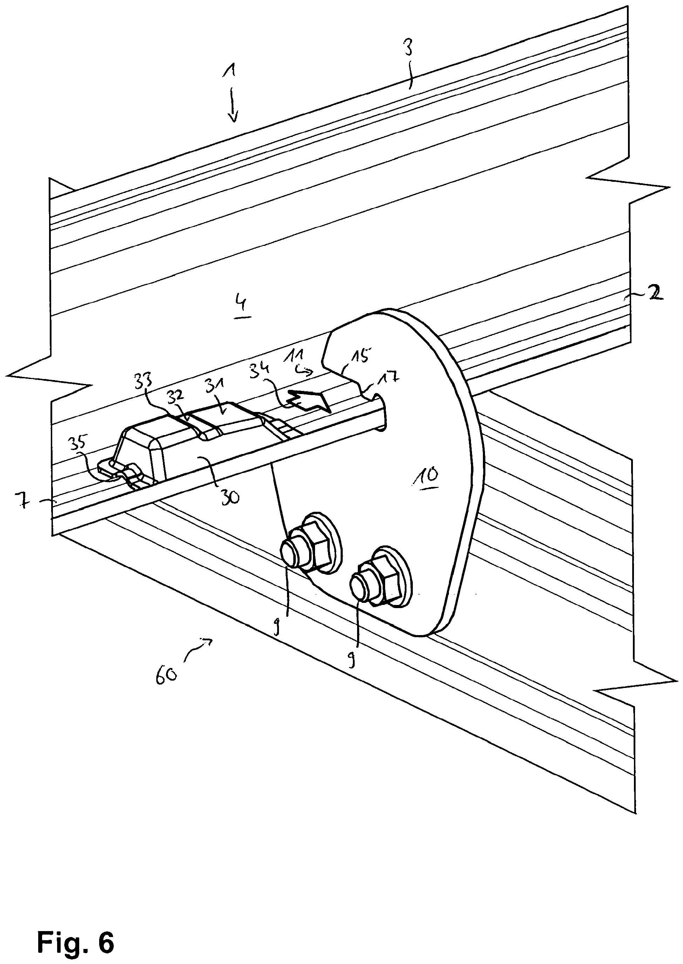

Aus **Fig. 5** ist anhand einer Abfolge ersichtlich, dass der Einschnitt **11** dergestalt auf den Befestigungsflansch **2** abgestimmt ist, dass die Schiene **1** mit dem unteren Befestigungsflansch **2** frontal durch die Stirnöffnung **12** in den Einschnitt **11** eingeführt werden kann, und zwar ausschließlich mit einer kombinierten Schwenk- und Schubbewegung. Zum einfacheren Einführen der Schiene **1** mit dem unteren Befestigungsflansch **2** voran ist in einem Bereich von außen zur Stirnöffnung **12** hin eine Einführschräge **19** vorgesehen. Die Einführschräge **19** und der dritte Randabschnitt **16** bilden zusammen eine Nasenform. In der Endstellung liegt die Schiene aufgrund ihrer Hangabtriebskraft an dem dritten Randabschnitt **16** an. In einem letzten Montageschritt wird der Keil **30** gemäß **Fig. 6** auf den Befestigungsflansch **2** aufgelegt und mit einer Schubbewegung **34** zwischen den unteren Befestigungsflansch **2** und dem zweiten Randabschnitt **15** eingetrieben.

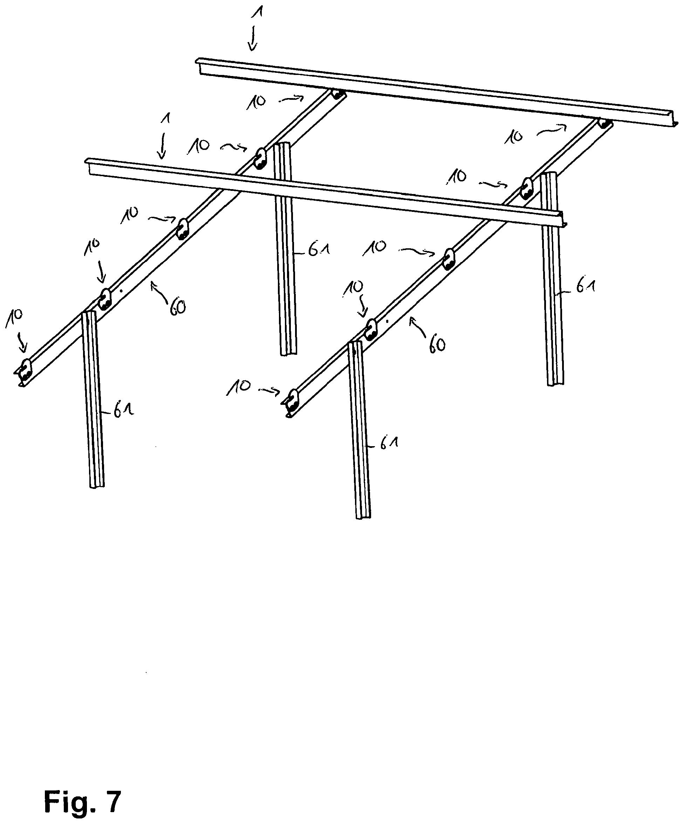

**Fig. 7** zeigt eine typische Anwendung der Vorrichtung in einem Montagegestell für Solaranlagen. Mehrere Stützen **61** tragen jeweils eine schräge Tragschiene **60.** Über den Tragschienen **60** sind zwei Schienen **1** mit z-förmigem Querschnitt angeordnet. Die obere der Schienen **1** ist wie zuvor mit den Tragschienen **60** mittels zweier Vorrichtungen befestigt. Die untere der Schiene **1** ruht noch unbefestigt auf den Tragschienen **60.** Die Halteplatten **2** können an den Tragschienen **60** bereits vor Anlieferung zum Errichtungsort des Montagegestells vormontiert sein.

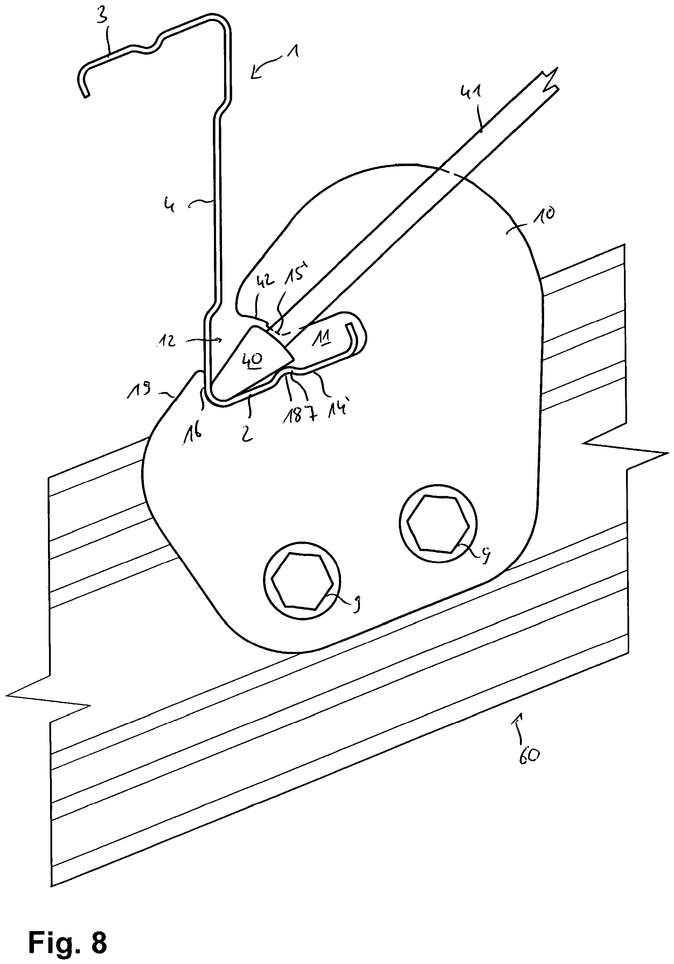

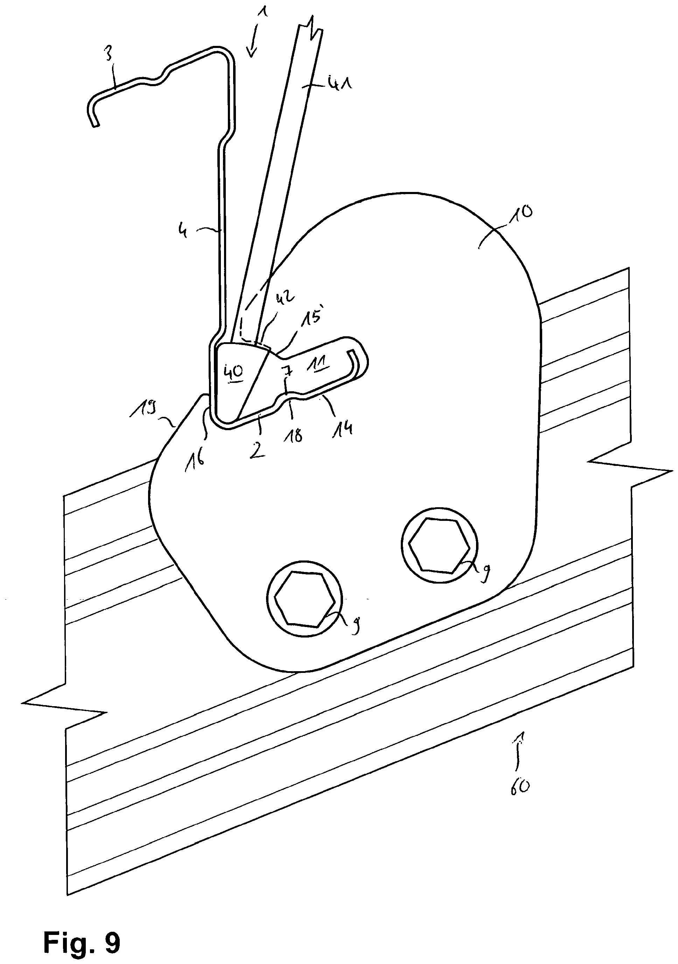

**Fig. 8** und **Fig. 9** zeigen eine zum Verständnis der Erfindung beitragende alternative Ausführungsform der Vorrichtung bei der das schraubenfreie Spannmittel als Exzenter **40** ausgeführt ist. Für gleiche Bauteile bezüglich des vorherigen Ausführungsbeispiels gelten die vorstehenden Ausführungen und Bezugszeichen entsprechend. Der erste Randabschnitt **14'** des Einschnitts **11**weist zur Lagesicherung der Schiene **1** eine Erhebung 18auf, die in eine Versteifungssicke **7** im unteren Befestigungsflansch **2** der Schiene **1** eingreift. Gegenüber dem ersten Randabschnitt **14'** ist ein zweiter Randabschnitt **15'** schräg angeordnet. Der Exzenter **40** wird mittels eines Hebels **41** betätigt und kann aus einen ungespannten Zustand gemäß **Fig. 8** in einen gespannten Zustand gemäß **Fig. 9** überführt werden. Der Exzenter **40** ist hierbei in dem runden Eckbereich zwischen dem unteren Befestigungsflansch **2** und dem Mittelsteg **4** drehgelagert und gleitet während der Betätigung auf dem zweiten Randabschnitt **15'.** Der zweite Randabschnitt **15'** ist etwa zentrisch zur Drehachse des Exzenters **40.** Zum Einrasten des Exzenters **40** in einer Endstellung im gespannten Zustand weist der zweiten Randabschnitt **15'** außerdem eine Rastvertiefung **42** auf. Im gespannten Zustand presst der Exzenter **40** den runden Eckbereich gegen den dritten Randabschnitt **16'** und auch den Befestigungsflansch **2** gegen den Randabschnitt **14'.** Da die Schiene **1** wie beim vorherigen Ausführungsbeispiel vom dritten Randabschnitt **16** übergriffen wird, ist die Schiene **1** gegen bezüglich dem ersten Randabschnitt **14'** abhebende Kräfte formschlüssig blockiert. Gemäß **Fig. 9** liegt der Exzenter **40** in der Endstellung an dem Mittelsteg **4** an, der dadurch als Endanschlag wirkt. Der Exzenter **40** kann vorteilhaft als Strangpressteil ausgeführt sein und eine Bohrung zum losen Einstecken des Hebels **41** enthalten. Um ein unbeabsichtigtes Verdrehen der Schiene **1,** das heißt ein Kippen des Befestigungsflanschs **2** im Einschnitt **11** zu blockieren, kann der Einschnitt **11** so ausgeführt sein, dass der Befestigungsflansch **2,** vorzugsweise an seinem äußersten Rand, zusätzlich gegenüberliegend dem ersten Randabschnitt **14'** am Einschnitt **11** anliegt. Schließlich sei angemerkt, dass die Lagesicherung der Schiene **1** mittels der Erhebung **18** auch bei dem vorhergehenden Ausführungsbeispiels von Vorteil sein kann.

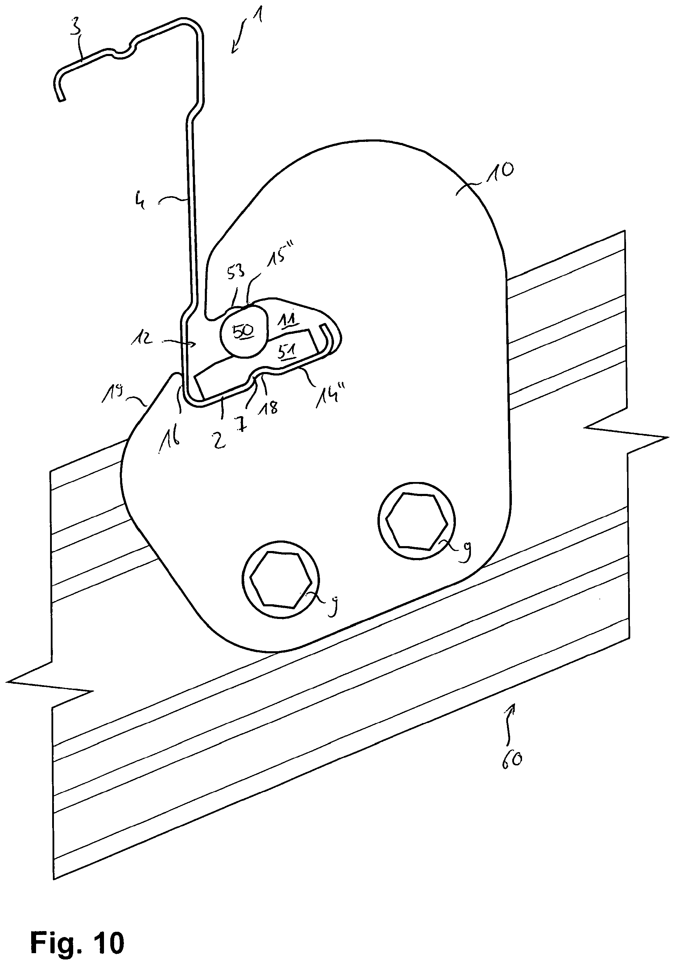

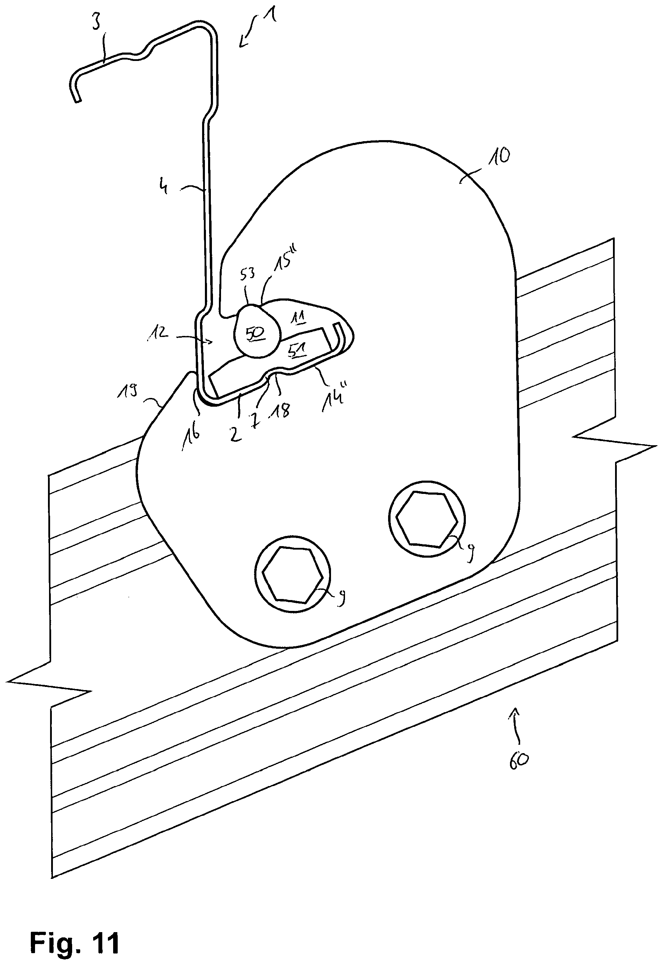

**Fig. 10** und **Fig. 11** zeigen eine weitere zum Verständnis der Erfindung beitragende Ausführungsform der Vorrichtung bei der das schraubenfreie Spannmittel wieder mittels eines Exzenters **50** wirkt. Für gleiche Bauteile gelten die vorstehenden Ausführungen und Bezugszeichen entsprechend. Gegenüber dem ersten Randabschnitt **14"** des Einschnitts **10** ist ein zweiter Randabschnitt **15"** angeordnet. Der Exzenter **50** ist auf einem Stützkörper **51** drehgelagert, der Bestandteil des schraubenfreien Spannmittels ist und auf dem Befestigungsflansch **2** lagegesichert aufliegt. Der Exzenter **50** kann mittels eines hier nicht gezeigten Hebels betätigt und kann aus einem ungespannten Zustand gemäß **Fig. 10** in einen gespannten Zustand gemäß **Fig. 11** überführt werden. Während der Betätigung des Exzenters **50** gleitet diese auf dem zweiten Randabschnitt **15".** Zum Einrasten des Exzenters **50** in einer Endstellung im gespannten Zustand weist der zweite Randabschnitt **15"** außerdem eine Rastvertiefung **53** auf. Im gespannten Zustand presst den Exzenter **50** den Befestigungsflansch **2** mittels des Stützkörpers **51** gegen den ersten Randabschnitt **14".** Da die Schiene **1** wie bei den vorherigen Ausführungsbeispielen vom dritten Randabschnitt **16** übergriffen wird, ist die Schiene **1** gegen bezüglich dem ersten Randabschnitt **14"** abhebende Kräfte formschlüssig blockiert. Der Exzenter **50** und der Stützkörper **51** können vorteilhaft als Strangpressteil ausgeführt sein. Der Exzenter **50** kann eine Bohrung zum losen Einstecken des Hebels **53** enthalten.

## Patentansprüche

1. Vorrichtung zum Befestigen einer Schiene **(1),** insbesondere einer rollgeformten Schiene mit z-förmigem Querschnitt, wobei die Schiene **(1)** einen Befestigungsflansch **(2)** aufweist, wobei die Vorrichtung eine Halteplatte **(10)** umfasst und die Halteplatte **(10)** einen Einschnitt **(11)** mit einer Stirnöffnung **(12)** enthält, wobei der Einschnitt **(11)** derart ausgebildet ist, dass die Schiene **(1)** mittels des Befestigungsflanschs **(2)** in den Einschnitt **(11)** einsetzbar ist, wobei die Schiene (11) die Halteplatte **(1)** kreuzend durchdringt und die Schiene **(1)** durch die Stirnöffnung **(12)** aus dem Einschnitt **(11)** herausragt, und der Einschnitt **(11)** einen ersten Randabschnitt **(14),** einen zweiten Randabschnitt **(15)** und einen dritten Randabschnitt **(16)** aufweist, und der zweite Randabschnitt **(15)** dem ersten Randabschnitt **(14)** gegenübersteht, und der Befestigungsflansch **(2)** auf dem ersten Randabschnitt **(14)** lagerbar ist, und wobei die Vorrichtung ein schraubenfreies Spannmittel **(30; 40; 50, 51)** umfasst, das vorgesehen ist, sich zwischen den Befestigungsflansch **(2)** und den zweiten Randabschnitt **(15)** zu spreizen und dazu geeignet ist, den Befestigungsflansch **(2)** gegen den ersten Randabschnitt **(14)** zu pressen, und der dritte Randabschnitt **(16)** als Anschlag wirkt, der dazu ausgebildet ist, ein Ausdringen der Schiene **(1)** aus dem Einschnitt **(11)** in einer Richtung **(18)** parallel zu dem ersten Randabschnitt **(14)** zu blockieren, wobei das schraubenfreie Spannmittel mittels eines Keils **(30)** wirkt, der eine Keilfläche **(31)** aufweist, an die eine Rastvertiefung **(32)** grenzt, **dadurch gekennzeichnet, dass** an die Rastvertiefung **(32)** ein Anschlag **(33)** angrenzt, der ein weiteres Eintreiben des Keils **(30)** blockiert, wobei der Anschlag **(33)** mit der Halteplatte **(10)** vorzugsweise im Bereich des zweiten Randabschnitts **(15)** zusammenwirkt.

2. Vorrichtung nach Anspruch 1, **dadurch gekennzeichnet, dass** der Einschnitt **(11)** einen Anschlag **(17)** aufweist, der eine Bewegung des Keils **(30)** weg von der Stirnöffnung **(12)** blockiert.

3. Vorrichtung nach einem der vorhergehenden Ansprüche, **dadurch gekennzeichnet, dass** der dritte Randabschnitt **(16)** dazu vorgesehen ist, die Schiene **(1)** bezüglich des ersten Randabschnitts **(14)** teilweise zu übergreifen.

4. Schienenkreuzverbindung mit einer Vorrichtung nach einem der vorhergehenden Ansprüche, **dadurch gekennzeichnet, dass** eine Tragschiene **(60)** vorgesehen ist, welche die Schiene **(1)** kreuzt und an der die Halteplatte **(10)** befestigt ist.

5. Schienenkreuzverbindung nach Anspruch 4, **dadurch gekennzeichnet, dass** der Einschnitt **(11)** auf den Befestigungsflansch **(2)** dergestalt abgestimmt ist, dass die Schiene **(1)** mit dem Befestigungsflansch **(2)** frontal durch die Stirnöffnung **(12)** in den Einschnitt **(11)** eingeführt werden kann.

6. Schienenkreuzverbindung nach Anspruch 4 oder 5, **dadurch gekennzeichnet, dass** der Einschnitt **(11)** auf den Befestigungsflansch **(2)** dergestalt abgestimmt ist, dass die Schiene **(1)** mit dem Befestigungsflansch **(2)** frontal durch die Stirnöffnung **(12)** in den Einschnitt **(11)** ausschließlich mit einer kombinierten Schwenk- und Schubbewegung eingeführt werden kann.

7. Schienenkreuzverbindung nach einem der Ansprüche 4 bis 6, **dadurch gekennzeichnet, dass** der zweite Randabschnitt **(15)** parallel zur Tragschiene **(60)** verläuft.

8. Verfahren zum Erstellen der Schienenkreuzverbindung nach einem der Ansprüche 4 bis 7 mit der Vorrichtung nach einem der Ansprüche 1 bis 3 und mit den Schritten:
a) Befestigen der Halteplatte **(10)** an der Tragschiene **(60),**
b) Einführen der Schiene **(1),** sodass der Befestigungsflansch **(2)** den Einschnitt **(11)** kreuzt, und Absetzen der Schiene **(1),** sodass der Befestigungsflansch **(2)** auf dem ersten Randabschnitt **(14)** lagert,
c) Positionieren des Keils **(30)** zwischen dem Befestigungsflansch **(2)** und dem zweiten Randabschnitt **(15),** und
d) Eintreiben des Keils **(30)** bis zum Anschlag **(33).**

9. Verfahren nach Anspruch 8, **dadurch gekennzeichnet, dass** zwischen Schritt a) und Schritt b) ein Verbringen der Tragschiene **(60)** und der Halteplatte **(10)** auf eine Baustelle erfolgt.

10. Verfahren nach Anspruch 8 oder 9, **dadurch gekennzeichnet, dass** der Schritt b) durch das Einführen der Schiene **(1)** mit dem Befestigungsflansch **(2)** frontal durch die Stirnöffnung **(12)** erfolgt.

11. Verfahren nach Anspruch 10, **dadurch gekennzeichnet, dass** das Einführen der Schiene **(1)** durch eine kombinierte Schwenk- und Schubbewegung erfolgt.

12. Verfahren nach einem der Ansprüche 8 bis 11, **dadurch gekennzeichnet, dass** während oder nach dem Absetzen die Schiene **(1)** an dem dritten Randabschnitt **(16)** angelegt wird oder dort selbst schwerkraftbedingt anschlägt.

## Claims

1. A device for fixing a rail (1), particularly a roll-formed rail with a Z-shaped cross section,
wherein the rail (1) has a fastening flange (2), wherein the device comprises a retaining plate (10) and the retaining plate (10) contains a notch (11) with an front opening (12), with the notch (11) being embodied such that the rail (1) can be inserted into the notch (11) via the fastening flange (2), wherein the rail (1) penetrates the retaining plate (10) so as to cross same, and the rail (1) protrudes out of the notch (11) through the front opening (12), and the notch (11) has a first edge portion (14), a second edge portion (15), and a third edge portion (16), and the second edge portion (15) faces the first edge portion (14), and the fastening flange can be supported on the first edge portion (14), and wherein the device comprises a screwless clamping device (30; 40, 50, 51) that is provided to spread between the fastening flange (2) and the second edge portion (15) and is capable of pressing the fasting flange (2) against the first edge portion (14), and the third edge portion (16) acts as a stop that is designed to block the rail (1) from escaping from the notch (11) in a direction (18) parallel to the first edge portion (14), wherein the screwless clamping device acts by means of a wedge (30) that has a wedge surface (31) adjoining a locking depression (32), **characterized in that** a stop (33) adjoins the locking depression (32) and blocks further penetration of the wedge (30), with the stop (33) coacting with the retaining plate (10), preferably in the vicinity of the second edge portion (15).

2. The device as claimed in claim 1, **characterized in that** the notch (11) has a stop (17) that blocks a movement of the wedge (30) away from the front opening (12).

3. The device as claimed in any one of the preceding claims, **characterized in that** the third edge portion (16) is provided for the purpose of partially engaging over the rail (1) with respect to the first edge portion (14).

4. A rail cross connection with a device as claimed in any one of the preceding claims, **characterized in that** a supporting rail (60) is provided that crosses the rail (1) and to which the retaining plate (10) is fastened.

5. The cross connection as claimed in claim 4, **characterized in that** the notch (11) is coordinated with the fastening flange (2) such that the rail (1) can be inserted with the fastening flange (2) frontally through the front opening (12) into the notch (11).

6. The cross connection as claimed in claim 4 or 5, **characterized in that** the notch (11) is coordinated with the fastening flange (2) such that the rail (1) can be inserted frontally through the front opening (12) into the notch (11) exclusively with a combined pivoting and sliding movement.

7. The cross connection as claimed in any one of claims 4 to 6, **characterized in that** the second edge portion (15) runs parallel to the supporting rail (60).

8. A method for producing the rail cross connection as claimed in any one of claims 4 to 7 with the device as claimed in any one of claims 1 to 3 and with the following steps:
a) fastening the retaining plate (10) to the supporting rail (60),
b) inserting the rail (1) so that the fastening flange (2) crosses the notch (11), and placing the rail (1) so that the fastening flange (2) is supported on the first edge portion (14),
c) positioning the wedge (30) between the fastening flange (2) and the second edge portion (15), and
d) driving in the wedge (30) to the stop (33).

9. The method as claimed in claim 8, **characterized in that**, between step a) and step b), the supporting rail (60) and the retaining plate (10) are brought to a building site.

10. The method as claimed in claim 8 or 9, **characterized in that** step b) is performed by inserting the rail (1) via the fastening flange (2) frontally through the front opening (12).

11. The method as claimed in claim 10, **characterized in that** the inserting of the rail (1) is performed by a combined pivoting and sliding movement.

12. The method as claimed in any one of claims 8 to 11, **characterized in that**, during or after the placing, the rail (1) is positioned against the third edge portion (16) or abuts there itself due to gravity.

## Revendications

1. Dispositif de fixation d'un rail (1), en particulier d'un rail profilé à section en Z, le rail (1) présentant une bride de fixation (2), le dispositif comprenant une plaque de maintien (10) et la plaque de maintien (10) contenant une entaille (11) dotée d'une ouverture frontale (12), l'entaille (11) étant conçue de telle sorte que le rail (1) peut être inséré dans l'entaille (11) au moyen de la bride de fixation (2), le rail (11) passant à travers la plaque de maintien (1) en croix et le rail (1) dépassant de l'entaille (11) à travers l'ouverture frontale (12), et l'entaille (11) présentant une première partie de bord (14), une deuxième partie de bord (15) et une troisième partie de bord (16), et la deuxième partie de bord (15) faisant face à la première partie de bord (14), et la bride de fixation (2) pouvant être montée sur la première partie de bord (14), et le dispositif comprenant un moyen de serrage sans vis (30 ; 40 ; 50, 51) prévu pour s'écarter entre la bride de fixation (2) et la deuxième partie de bord, (15) et adapté à presser la bride de fixation (2) contre la première partie de bord (14), et la troisième partie de bord (16) agissant comme une butée conçue pour bloquer une sortie du rail (1) de l'entaille (11) dans une direction (18) parallèle à la première partie de bord (14), le moyen de serrage sans vis agissant au moyen d'une cale (30) qui présente une surface de cale (31) à laquelle jouxte un creux d'encliquetage (32), **caractérisé en ce qu'**une butée (33) est adjacente au creux d'encliquetage (32), laquelle bloque un enfoncement supplémentaire de la cale (30), la butée (33) coopérant avec la plaque de maintien (10) de préférence dans la zone de la deuxième partie de bord (15).

2. Dispositif selon la revendication 1, **caractérisé en ce que** l'entaille (11) présente une butée (17) qui bloque un mouvement de la cale (30) dans la direction qui l'éloigne de l'ouverture frontale (12).

3. Dispositif selon l'une des revendications précédentes, **caractérisé en ce que** la troisième partie de bord (16) est prévue pour déborder partiellement sur le rail (1) par rapport à la première partie de bord (14).

4. Raccordement de rails en croix avec un dispositif selon l'une des revendications précédentes, **caractérisée en ce qu'**il est prévu un rail porteur (60) qui croise le rail (1) et sur lequel est fixée la plaque de maintien (10).

5. Raccordement de rails en croix selon la revendication 4, **caractérisé en ce que** l'entaille (11) est adaptée à la bride de fixation (2) de telle sorte que le rail (1) muni de la bride de fixation (2) peut être introduit frontalement dans l'entaille (11) à travers l'ouverture frontale (12).

6. Raccordement de rails en croix selon la revendication 4 ou 5, **caractérisé en ce que** l'entaille (11) est adaptée à la bride de fixation (2) de telle sorte que le rail (1) muni de la bride de fixation (2) peut être introduit frontalement dans l'entaille (11) à travers l'ouverture frontale (12) exclusivement par un mouvement combiné de pivotement et de poussée.

7. Raccordement de rails en croix selon l'une des revendications 4 à 6, **caractérisé en ce que** la deuxième partie de bord (15) s'étend parallèlement au rail porteur (60).

8. Procédé pour réaliser le raccordement de rails en croix selon l'une des revendications 4 à 7 avec le dispositif selon l'une des revendications 1 à 3 et comprenant les étapes consistant à :
a) fixer la plaque de maintien (10) sur le rail porteur (60),
b) introduire le rail (1) de telle sorte que la bride de fixation (2) croise l'entaille (11) et poser le rail (1) de telle sorte que la bride de fixation (2) repose sur la première partie de bord (14),
c) positionner la cale (30) entre la bride de fixation (2) et la deuxième partie de bord (15), et
d) enfoncer la cale (30) jusqu'à la butée (33).

9. Procédé selon la revendication 8, **caractérisé en ce qu'**entre l'étape a) et l'étape b), le rail porteur (60) et la plaque de maintien (10) sont emportés sur un chantier.

10. Procédé selon la revendication 8 ou 9, **caractérisé en ce que** l'étape b) est réalisée en introduisant le rail (1) muni de la bride de fixation (2) frontalement à travers l'ouverture frontale (12).

11. Procédé selon la revendication 10, **caractérisé en ce que** le rail (1) est introduit par un mouvement combiné de pivotement et de poussée.

12. Procédé selon l'une des revendications 8 à 11, **caractérisé en ce que** pendant ou après la pose, le rail (1) est appliqué contre le troisième bord (16) ou y bute de lui-même par gravité.
